# FASCICULE DE BREVET EUROPEEN

(11) **EP 2 016 874 B1**
(45) Date de publication et mention de la délivrance du brevet: **09.11.2011**
(21) Numéro de dépôt: 08447036.8
(22) Date de dépôt: 22.07.2008
(51) Int. Cl.: A47J 27/08

(54) **Autocuiseur pourvu d'une fenêtre d'information**
Schnellkochtopf, der mit einem Informationsfenster ausgestattet ist
Pressure cooker equipped with an information window

(30) Priorité: 20.07.2007 FR 0705262
(43) Date de publication de la demande: 21.01.2009
(73) Titulaire: SEB S.A., 69132 Ecully Cedex (FR)
(72) Inventeur: Rhetat, Eric Jacques, 21000 Dijon (FR); Roussard, Philippe, 21120 Is sur Tille (FR)
(74) Mandataire: Martin, Didier Roland Valéry

(56) Documents cités:
- DE-A1- 2 702 906
- DE-A1- 2 910 789
- DE-U1- 29 921 808

## Description

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein, comme divulgué dans le document DE 2 702 906.

La présente invention concerne plus particulièrement une marmite domestique comprenant un moyen de commande d'au moins une partie de son fonctionnement, ledit moyen de commande étant monté mobile entre une pluralité de positions.

Les autocuiseurs domestiques sont bien connus. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche. Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Le fonctionnement de ces autocuiseurs connus est gouverné par différents organes, tels que par exemple :
- un moyen de verrouillage 1 déverrouillage capable d'assurer le verrouillage et le déverrouillage du couvercle relativement à la cuve,
- une soupape de régulation de pression permettant de maintenir la pression dans l'enceinte à un niveau prédéterminé appelé pression de fonctionnement,
- ou encore un organe de décompression, permettant de faire chuter la pression au sein de l'enceinte, notamment en fin de processus de cuisson, pour que l'utilisateur puisse ouvrir le couvercle dans des conditions de sécurité acceptables.

Chacune de ces fonctions peut être commandée par l'utilisateur grâce à un ou plusieurs moyens de commande correspondant destinés à être actionnés manuellement par l'utilisateur.

On connaît en particulier un appareil de cuisson sous pression doté d'un bouton de commande rotatif monté sur son couvercle, ledit bouton de commande rotatif permettant à l'utilisateur de commander manuellement à la fois le verrouillage 1 déverrouillage du couvercle relativement à la cuve et la décompression de l'enceinte.

Plus précisément, le bouton de commande rotatif est monté mobile à rotation entre trois positions indexées correspondant respectivement à des modes de fonctionnement particulier de l'appareil. Ainsi, le bouton rotatif en question peut se trouver dans une première position dite « *de verrouillage et d'étanchéité* », correspondant au verrouillage du couvercle sur la cuve et à la fermeture étanche de l'enceinte pour que cette dernière puisse monter en pression. Le bouton rotatif peut également se trouver dans une deuxième position, distincte de la première position, dite de « *verrouillage et décompression* ». Cette deuxième position correspond au verrouillage du couvercle sur la cuve ainsi qu'à la mise en communication de l'intérieur de l'enceinte avec l'extérieur pour faire chuter la pression régnant au sein de l'enceinte.

Enfin, le bouton rotatif peut également se trouver dans une troisième position, distincte des deux autres positions, dite d'« *d'ouverture et de déverrouillage* », et permettant à l'utilisateur de séparer le couvercle de la cuve en toute sécurité, dès que la pression régnant dans l'enceinte n'excède plus un niveau prédéterminé de sécurité.

Le bouton de commande comprend une poignée destinée à être tournée manuellement par l'utilisateur, ladite poignée s'épanouissant vers sa base en une couronne circulaire qui vient de matière avec ladite poignée et sur laquelle un repère visuel de positionnement est réalisé. Le bouton de commande est lui-même rapporté sur un capot en plastique monté fixe relativement au couvercle, de sorte que la poignée et son embase tournent relativement au capot.

Des pictogrammes correspondants aux trois différentes positions que peut prendre le bouton de commande sont réalisés sur le capot.

Ainsi, pour chaque position indexée du bouton de commande (position à laquelle correspond un mode de fonctionnement respectif de l'autocuiseur), le repère visuel réalisé sur la couronne dudit bouton est situé en face du pictogramme correspondant réalisé sur le capot fixe. De cette manière, en faisant tourner la poignée jusqu'à amener le repère dont sa couronne est pourvue en concordance avec l'un des pictogrammes réalisés sur le capot, il est possible à l'utilisateur de sélectionner la position indexée (et donc le mode de fonctionnement correspondant) qui l'intéresse. Réciproquement, l'utilisateur est en mesure de savoir à tout moment, en regardant quel est le pictogramme en face duquel est positionné le repère, dans quelle position se trouve le bouton de commande et donc quel est le mode de fonctionnement particulier de l'autocuiseur actuellement sélectionné.

Un tel autocuiseur s'il donne généralement toute satisfaction, n'en présente pas moins certains inconvénients.

Ainsi, les autocuiseurs connus conformes à la description qui précède laissent apparaître en permanence à la vue de l'utilisateur, tous les pictogrammes du capot, de sorte que l'utilisateur n'est pas directement capable de savoir en un coup d'oeil quelle est la position instantanée du bouton de commande et donc quel est le mode de fonctionnement de l'autocuiseur sélectionné. Afin d'accéder à l'information recherchée, l'utilisateur est en effet contraint de rechercher, par une démarche positive, quel est le pictogramme avec lequel le repère concorde. Il est ainsi fréquent, en particulier pour un utilisateur non averti, de ne pas avoir ce réflexe et par conséquent de ne pas remarquer que la position du bouton de commande ne correspond pas à celle souhaitée. Ce déficit d'ergonomie et de clarté d'information peut conduire l'utilisateur à ne pas utiliser correctement son autocuiseur (l'utilisateur pensant par exemple avoir lancé un cycle de cuisson sous pression alors qu'il a laissé, sans s'en apercevoir, son autocuiseur en position de décompression) voire peut entraîner, dans le cas le plus critique et en combinaison avec d'autres facteurs, un risque éventuel d'accident, notamment par brûlure.

Ce problème est d'autant plus prégnant que le repère réalisé sur le bouton, tout comme les pictogrammes réalisés sur le capot, peuvent être relativement difficiles à distinguer visuellement, de sorte que leur concordance éventuelle est bien entendu elle aussi difficile à distinguer.

Cela provient du fait que pour des raisons d'organisation industrielle et de durabilité, le repère et les pictogrammes sont généralement réalisés par simple formage (en creux ou en relief) de la matière constituant respectivement la couronne et le capot, sans coloration additionnelle.

Le repère et les pictogrammes apparaissent ainsi en ton sur ton relativement à la pièce qui les porte, ce qui les rend de ce fait difficiles à distinguer, en particulier pour l'utilisateur non averti ou souffrant d'une déficience visuelle. Compte-tenu du relatif déficit d'ergonomie et de clarté d'information lié au système de repérage visuel de l'art antérieur décrit ci-avant, il s'avère nécessaire de permettre à l'utilisateur de visualiser directement par lui-même l'état de certains organes. En particulier, il n'est pas envisageable, avec un tel système de repérage visuel, de masquer complètement le système de verrouillage du couvercle sur la cuve. Il convient au contraire, pour le confort et la sécurité d'utilisation, de laisser le système de verrouillage en permanence à la vue de l'utilisateur, de façon que ce dernier soit en mesure de déterminer avec certitude si le couvercle est verrouillé ou non sur la cuve. Toutefois, le fait que le système de verrouillage soit visible en permanence peut contribuer à ce que l'utilisateur perçoive l'autocuiseur comme étant une machine complexe et dangereuse, ce qui n'est pourtant pas le cas.

De même, la visualisation permanente par l'utilisateur de l'ensemble des pictogrammes peut être de nature à fausser la perception qu'a l'utilisateur du degré de difficulté d'utilisation de son autocuiseur. Ce degré de difficulté est en réalité faible voire nul, mais la multiplication des symboles visuels peut laisser à penser à certains utilisateurs que leur autocuiseur est un dispositif dont le pilotage est extrêmement complexe et qui nécessite de ce fait un apprentissage long et rébarbatif.

Les objets assignés à l'invention visent en conséquence à porter remède aux divers inconvénients énumérés précédemment et à proposer une nouvelle marmite domestique dont l'utilisation est particulièrement simple, intuitive, ergonomique et sûre.

Un autre objet de l'invention vise à proposer une nouvelle marmite domestique dont l'utilisation repose sur des principes simples et bon marché. Un autre objet de l'invention vise à proposer une nouvelle marmite domestique dont la construction est basée sur des principes généraux bien connus et éprouvés.

Un autre objet de l'invention vise à proposer une nouvelle marmite domestique qui permet à l'utilisateur de connaître de manière très accessible, en un coup d'oeil, quel mode de fonctionnement de la marmite est sélectionné.

Un autre objet de l'invention vise à proposer une nouvelle marmite domestique qui fournit de manière très claire à l'utilisateur des informations quant à ses fonctions les plus importantes.

Un autre objet de l'invention vise à proposer une nouvelle marmite domestique dont l'aspect extérieur est rassurant pour l'utilisateur.

Un autre objet de l'invention vise à proposer une nouvelle marmite domestique qui limite les possibilités pour l'utilisateur de commettre des erreurs dans son maniement.

Un autre objet de l'invention vise à proposer une nouvelle marmite domestique dont la conception et le montage sont simplifiés.

Un autre objet de l'invention vise à proposer une nouvelle marmite domestique dont la conception est particulièrement compacte et bon marché.

Les objets assignés à l'invention sont atteints à l'aide d'une marmite domestique comprenant un moyen de commande d'au moins une partie de son fonctionnement, ledit moyen de commande étant monté mobile entre une pluralité de positions, ladite marmite étant caractérisée en ce qu'elle est en outre pourvue d'une fenêtre d'information et d'au moins un indicateur représentatif de l'une des positions du moyen de commande, et en ce que la fenêtre, l'indicateur et le moyen de commande coopèrent pour que ledit indicateur apparaisse dans la fenêtre lorsque le moyen de commande se trouve dans la position correspondante.

D'autres particularités et avantages de l'invention apparaîtront et ressortiront plus en détails à la lecture de la description faite ci-après, en référence aux dessins annexés, donnés à titre d'exemple illustratif et non limitatif dans lesquels :
- La figure 1 illustre, selon une vue générale en perspective, une marmite conforme à l'invention, constituée en l'espèce par un autocuiseur domestique, dont le moyen de commande se trouve dans une position dite de « *verrouillage et décompression* ».
- La figure 2 illustre, selon une vue générale en perspective partiellement coupée, selon deux plans de coupe sensiblement perpendiculaires, l'autocuiseur de la figure 1 dont le moyen de commande se trouve cette fois dans une position dite « *d'ouverture* ».
- La figure 3 illustre, selon une vue de dessus partiellement écorchée et coupée, l'autocuiseur des figures 1 et 2 dont le moyen de commande se trouve cette fois dans une position dite de « *verrouillage et d'étanchéité* ».
- La figure 4 illustre, selon une vue de dessus partiellement écorchée et coupée, l'autocuiseur des figures 1 à 3 avec son moyen de commande en position de verrouillage et décompression.
- La figure 5 illustre, selon une vue de dessus partiellement écorchée et coupée, l'autocuiseur des figures 1 à 4 avec son moyen de commande en position d'ouverture.
- La figure 6 illustre, selon une vue latérale en coupe, la cuve de l'autocuiseur illustré aux figures 1 à 5.

L'invention concerne une marmite domestique 1, c'est-à-dire un récipient de cuisine destiné à la cuisson d'aliments sur le feu, dans un contexte domestique.

De préférence, la marmite domestique 1 est constituée par un autocuiseur, c'est-à-dire une marmite à pression. Bien évidemment, l'invention n'est pas limitée à un autocuiseur, et concerne également des marmites fonctionnant à pression atmosphérique (ou du moins proche de la pression atmosphérique).

L'invention s'avère cependant particulièrement avantageuse lorsque la marmite 1 est constituée par un autocuiseur. Pour cette raison, et dans un souci de simplicité de description, la description qui suit fera référence uniquement à un autocuiseur, à titre purement illustratif et non limitatif.

L'autocuiseur 1 conforme à l'invention est destiné à assurer la cuisson de différents aliments sous pression dans un contexte domestique. Il forme donc à ce titre un autocuiseur domestique. L'autocuiseur 1 conforme à l'invention est donc un ustensile de cuisine présentant un caractère portatif (c'est-à-dire déplaçable manuellement) et indépendant.

Avantageusement, l'autocuiseur 1 conforme à l'invention constitue une marmite passive thermiquement, conçue pour monter en pression sous l'effet d'une source de chauffe qui lui est extérieure, telle qu'une plaque de cuisson.

De façon préférentielle, l'autocuiseur 1 conforme à l'invention comprend une cuve 2 formant récipient de cuisson et présentant avantageusement sensiblement une symétrie de révolution selon un axe X-X'. Par la suite, l'adjectif « *axial* » se réfèrera à la direction de cet axe de symétrie X-X', direction qui s'apparente à la direction verticale lorsque l'appareil est en fonctionnement normal. La cuve 2 est par exemple et de manière classique fabriquée par emboutissage d'un flan en matériau métallique tel que l'aluminium ou l'acier inoxydable.

L'autocuiseur 1 conforme à l'invention comprend également un couvercle 3 destiné à être rapporté sur ladite cuve 2 pour former avec cette dernière une enceinte de cuisson de préférence sensiblement étanche, c'est-à-dire suffisamment hermétique pour permettre une montée en pression significative en son sein. Le couvercle 3 est avantageusement réalisé en un matériau métallique (par exemple en acier inoxydable) et affecte préférentiellement une forme générale discoïde, complémentaire de la forme de la cuve 2.

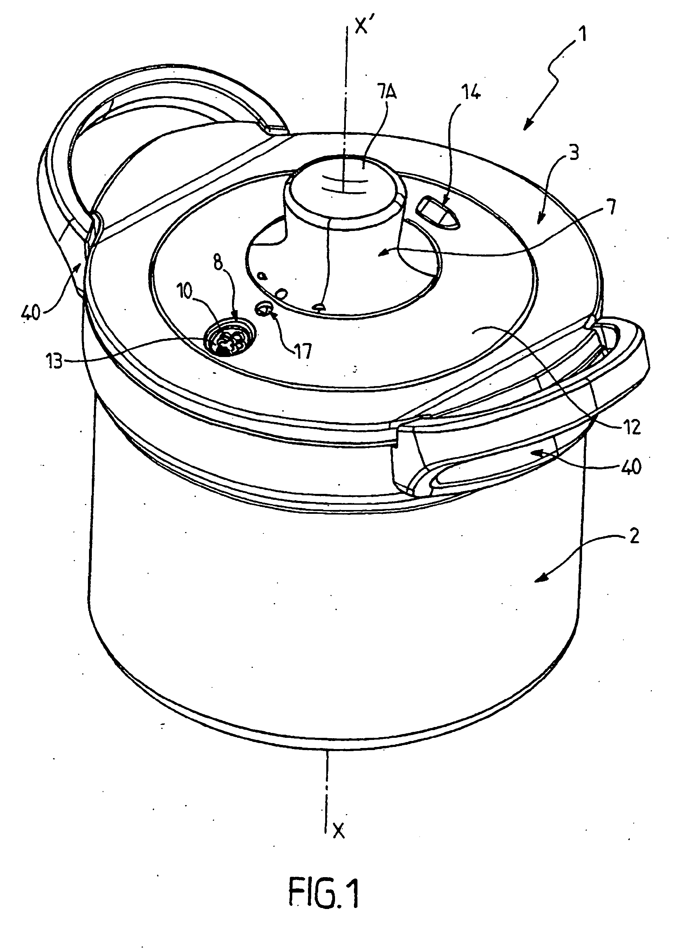

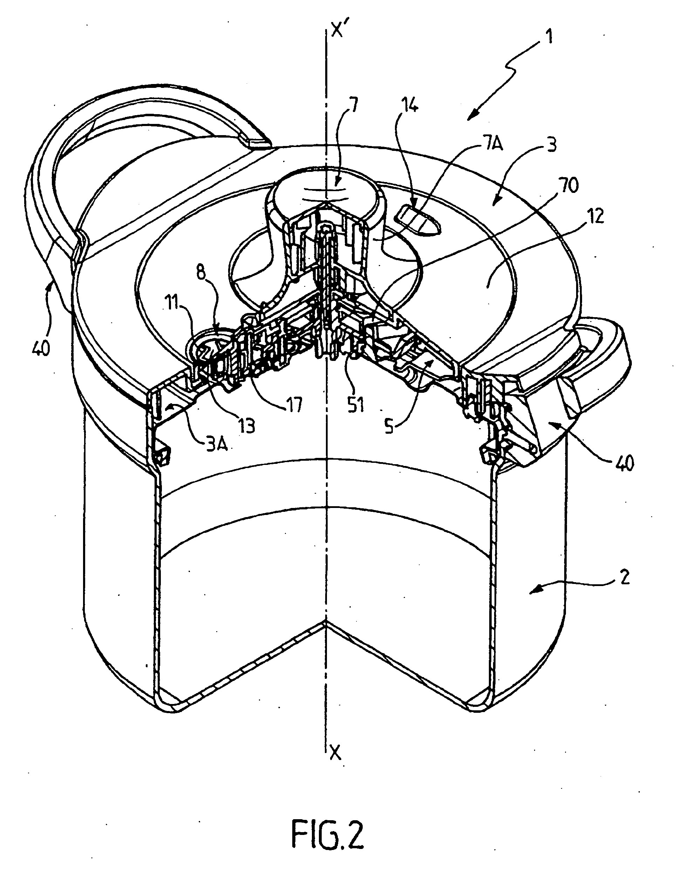

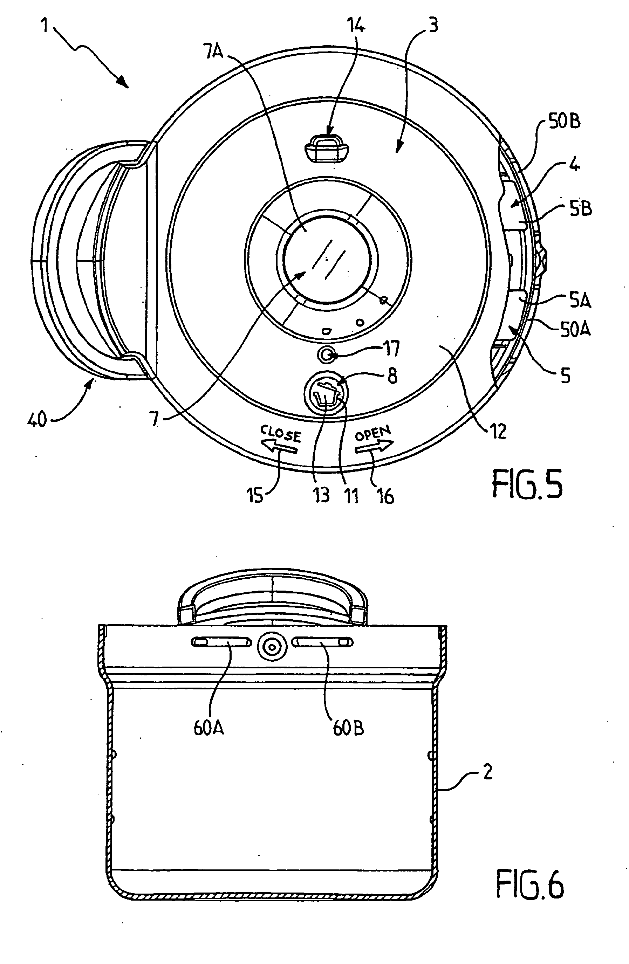

Avantageusement, le couvercle 3 peut être verrouillé ou déverrouillé à volonté sur la cuve 2, le verrouillage du couvercle 3 permettant à l'enceinte de monter en pression sans échappement du couvercle 3 sous l'effet de la pression. A cette fin, l'autocuiseur 1 comprend préférentiellement un moyen de verrouillage / déverrouillage 4 du couvercle 3 sur la cuve 2. Le moyen de verrouillage / déverrouillage 4 peut être de tout type connu de l'homme du métier, et est de façon classique susceptible d'évoluer entre une configuration de verrouillage du couvercle 3 relativement à la cuve 2 (illustrée aux figures 1, 3 et 4) dans laquelle le couvercle 3 est solidarisé à la cuve 2, et une configuration de déverrouillage du couvercle 3 relativement à la cuve 2 (illustrée aux figures 2 et 5), dans laquelle le couvercle 3 peut être librement séparé de la cuve 2.

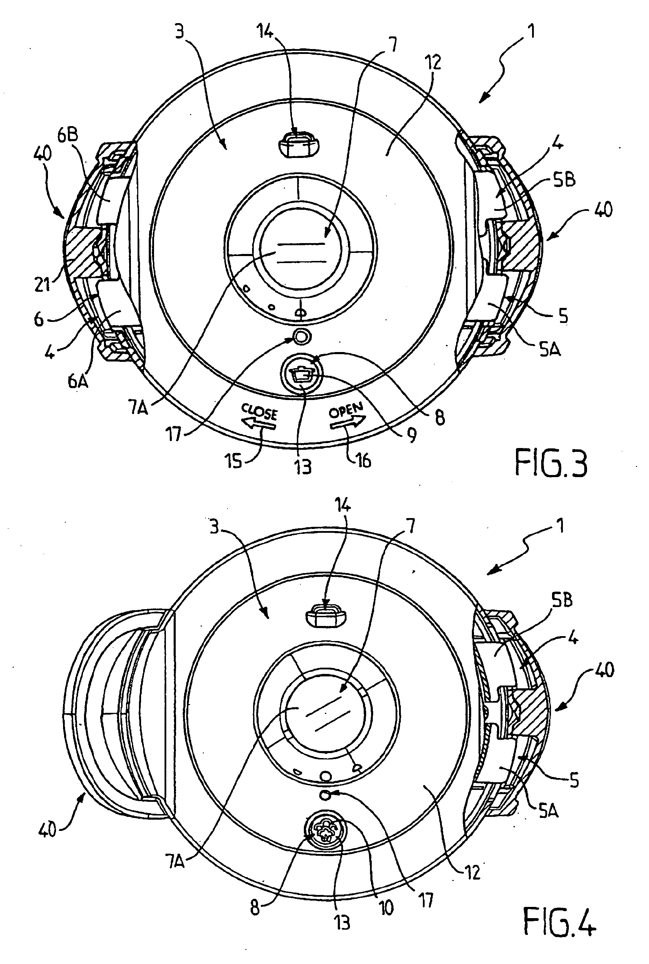

De préférence, le moyen de verrouillage / déverrouillage 4 comprend au moins un élément de verrouillage 5, 6 du couvercle 3 relativement à la cuve 2. L'élément de verrouillage 5, 6 est monté mobile sur le couvercle 2, sensiblement en translation radiale par rapport à l'axe X-X', par l'intermédiaire d'au moins un moyen d'entraînement correspondant entre une position indexée de verrouillage (illustrée par exemple à la figure 3) et une position indexée de déverrouillage (illustrée par exemple à la figure 5).

Selon un mode de réalisation non illustré, chaque élément de verrouillage 5, 6 peut comprendre une mâchoire destinée à enserrer les bords périphériques de la cuve 2 et du couvercle 3. Ladite mâchoire peut se présenter sous la forme d'une plaque métallique, profilée en U à son extrémité extérieure, tel que cela est bien connu en soi de l'homme du métier.

Selon le mode de réalisation alternatif préféré illustré aux figures, l'autocuiseur 1 conforme à l'invention comprend deux éléments de verrouillage 5, 6 constitués par des segments bifides présentant chacun deux pênes de verrouillage respectifs 5A, 5B, 6A, 6B, lesdits segments étant positionnés en vis-à-vis, de manière diamétralement opposée en regard de l'axe de symétrie général X-X' de l'appareil. Avantageusement, le moyen d'entraînement pour chaque segment bifide consiste en un bras entraîneur respectif, lequel bras entraîneur peut par exemple venir de matière avec le segment correspondant. Des ouvertures de verrouillage 50A, 50B, 60A, 60B complémentaires aux pênes 5A, 5B, 6A, 6B sont ménagées dans la cuve 2, de telle sorte que le verrouillage du couvercle 3 correspond à l'engagement des pênes 5A, 5B, 6A, 6B dans les ouvertures complémentaires respectives 50A, 50B, 60A, 60B (cf. figure 3), à la manière d'un système de serrure pêne / gâche, pour empêcher sensiblement tout mouvement du couvercle 3 par rapport à la cuve 2, tandis que le déverrouillage du couvercle 3 correspond à la rétractation et au désengagement des pênes 5A, 5B, 6A, 6B hors des lumières 50A, 50B, 60A, 60B correspondantes pour que lesdits pênes ne coopèrent pas avec lesdites lumières 50A, 50B, 60A, 60B.

Le moyen de verrouillage / déverrouillage 4 du couvercle 3 relativement à la cuve 2 n'est cependant pas limité à un système à segments ou à mâchoires et peut par exemple reposer sur d'autres principes, bien connus en tant que tels, du genre moyen de verrouillage / déverrouillage à baïonnettes ou moyen de verrouillage / déverrouillage à étrier.

L'autocuiseur 1 conforme à l'invention comprend par ailleurs un moyen de commande 7 d'au moins une partie de son fonctionnement. En d'autres termes, tel que cela est bien connu en soi, le moyen de commande 7 permet à l'utilisateur de piloter une ou plusieurs des fonctions de l'autocuiseur 1, comme par exemple, à titre purement illustratif et non limitatif, le verrouillage/déverrouillage du couvercle 3 relativement à la cuve 2 et/ou la décompression de l'enceinte de cuisson et/ou le réglage du niveau de pression de fonctionnement.

Dans l'exemple illustré aux figures, l'autocuiseur 1 comprend un unique moyen de commande 7. Bien évidemment, l'invention n'est absolument pas limitée à un autocuiseur comportant un seul moyen de commande 7 et il est tout à fait envisageable, sans pour autant que l'on sorte du cadre de l'invention, que l'autocuiseur 1 comprenne plusieurs moyens de commande, chacun d'eux étant dédié à une fonction spécifique (par exemple un premier moyen de commande étant dédié à la commande du verrouillage/déverrouillage du couvercle relativement à la cuve, tandis qu'un deuxième moyen de commande est dédié à la commande de la décompression et éventuellement au réglage du niveau de pression de fonctionnement).

Tel que cela est également bien connu en tant que tel, le moyen de commande 7 est monté mobile entre une pluralité de positions, chacune de ces positions distinctes correspondant à un fonctionnement spécifique de l'autocuiseur 1.

Par exemple, dans l'exemple illustré aux figures, le moyen de commande 7 est monté mobile entre au moins une première position (illustrée à la figure 3) et une deuxième position (illustrée à la figure 5), le moyen de commande 7 permettant à l'utilisateur de commander au moins le moyen de verrouillage/déverrouillage 3 de façon que la première position corresponde au verrouillage et que la deuxième position corresponde au déverrouillage.

Dans l'exemple illustré aux figures, le moyen de commande 7 est conçu pour être actionné manuellement par l'utilisateur. A cette fin, le moyen de commande 7 est monté sur le couvercle, et comprend de préférence un pommeau 7A monté sur le couvercle 3 à rotation selon l'axe X-X', chaque position du moyen de commande 7 correspondant ainsi à une orientation angulaire spécifique du pommeau 7A.

Ainsi, pour passer de la première à la deuxième position du moyen de commande 7 et vice versa, il suffit à l'utilisateur de tourner le pommeau 7A autour de l'axe X-X'. Le pommeau 7A est relié mécaniquement aux éléments de verrouillage 5, 6 pour que la rotation du pommeau 7A de la première à la deuxième position engendre une rétractation radiale (centripète) des pênes 5A, 5B, 6A, 6B tandis que la rotation du pommeau 7A de sa deuxième vers sa première position engendre au contraire un déplacement radial centrifuge des éléments de verrouillage 5, 6 permettant d'engager les pênes 5A, 5B, 6A, 6B dans les ouvertures de verrouillage 50A, 50B, 60A, 60B correspondantes ménagées dans la cuve 2. L'entraînement des éléments de verrouillage 5, 6 par le pommeau 7A peut être réalisé par tout moyen connu de l'homme du métier.

Par exemple et tel que cela est connu en tant que tel, le pommeau 7A peut être solidaire d'une plaque dans laquelle sont ménagées des lumières d'entraînement 70, les éléments de verrouillage 5, 6 étant eux-mêmes pourvus de pions respectifs 51 engagés dans les lumières d'entraînement 70, de façon que la rotation du pommeau 7A entraîne la rotation concomitante des lumières d'entraînement 70 lesquelles, par un effet de rampe et en combinaison avec un guidage en translation des éléments de verrouillage 5, 6, transforment leur mouvement de rotation en un mouvement de translation radiale des éléments de verrouillage 5, 6.

Avantageusement, l'autocuiseur 1 conforme à l'invention comprend un organe de décompression activable/désactivable, agencé pour autoriser, lorsqu'il est activé, une chute de la pression régnant dans l'enceinte en vue de pouvoir ouvrir ultérieurement l'enceinte, c'est-à-dire faire passer le moyen de verrouillage/déverrouillage 4 de sa configuration de verrouillage à sa configuration de déverrouillage pour permettre la libération du couvercle 3. A cette fin, l'organe de décompression est préférentiellement activable quel que soit le niveau de pression régnant dans l'enceinte, et en particulier est activable lorsque ce niveau de pression correspond à la pression de fonctionnement (régulée par une soupape de régulation, comme cela est bien connu en tant que tel) de l'autocuiseur 1. Les fonctions de l'organe de décompression activable/désactivable sont donc notamment les suivantes :
- lorsque l'organe de décompression est désactivé, il n'autorise sensiblement aucune fuite de vapeur de l'intérieur de l'enceinte vers l'extérieur et permet la montée en pression de l'enceinte ;
- lorsque l'organe de décompression est activé, il met en communication l'intérieur de l'enceinte avec l'extérieur pour créer une fuite de vapeur engendrant une diminution de la pression régnant à l'intérieur de l'enceinte, ladite pression évoluant d'une première valeur (correspondant par exemple à la pression de fonctionnement) à une deuxième valeur moins élevée, compatible avec le déverrouillage du couvercle dans des conditions de sécurité acceptables pour l'utilisateur.

L'organe de décompression pourra consister en tout moyen connu de l'homme du métier.

Selon le mode de réalisation particulièrement avantageux illustré aux figures, le moyen de commande 7 permet à l'utilisateur de commander non seulement, comme expliqué dans ce qui précède, le moyen de verrouillage/déverrouillage 4 mais également l'organe de décompression. A cet effet, le moyen de commande 7 est monté mobile entre au moins une troisième et une quatrième position, et il permet à l'utilisateur de commander l'organe de décompression de façon que lorsque le moyen de commande 7 occupe sa troisième position (illustré à la figure 3), l'organe de décompression est désactivé tandis que lorsque le moyen de commande occupe sa quatrième position (illustré à la figure 5), l'organe de décompression est activé.

Ainsi, dans l'exemple illustré aux figures, l'autocuiseur 1 comporte un moyen de commande 7 unique et commun permettant de piloter à la fois le verrouillage/déverrouillage du couvercle 3 relativement à la cuve 2 et l'activation/désactivation de l'organe de décompression. Bien entendu, il est tout à fait envisageable, sans pour autant que l'on sorte du cadre de l'invention, que le moyen de commande 7 commande seulement une seule de ces deux fonctions, voire encore une autre fonction (tarage de la pression de fonctionnement par exemple).

Avantageusement, les première et troisième positions du moyen de commande 7 (et donc du pommeau 7A) sont confondues. Ainsi, la position unique illustrée à la figure 3 du moyen de commande 7 (et correspondant aux première et troisième positions évoquées dans ce qui précède) est une position dite de « *verrouillage et d'étanchéité* » dans laquelle l'enceinte de cuisson peut monter en pression, dans la mesure où d'une part le couvercle 3 est verrouillé sur la cuve 2 et d'autre part l'organe de décompression est désactivé.

De façon avantageuse, les deuxième et quatrième positions du moyen de commande 7 sont également confondues. Dans ce cas, la position unique illustrée à la figure 5 (et correspondant aux deuxième et quatrième positions précitées) est une position dite « *d'ouverture* », correspondant à un déverrouillage du couvercle 3 relativement à la cuve 2 ainsi qu'à une désactivation de l'organe de décompression.

De préférence, le moyen de commande 4 est également conçu pour pouvoir se trouver dans une position intermédiaire dite de « *verrouillage et décompression* » correspondant à un verrouillage du couvercle et à l'activation de l'organe de décompression. Cette position de verrouillage et décompression est située, sur la course du moyen de commande 4, entre la position de verrouillage et d'étanchéité et la position d'ouverture. Elle permet d'éviter que le moyen de commande 4 ne puisse atteindre directement la position d'ouverture à partir de sa position de verrouillage et d'étanchéité lorsque l'autocuiseur est sous pression, ce qui pourrait poser un problème de sécurité.

Conformément à l'invention, l'autocuiseur 1 est pourvu d'une fenêtre d'information 8 et d'au moins un indicateur représentatif de l'une des positions du moyen de commande 7. La fenêtre 8, l'indicateur et le moyen de commande 7 coopérent pour que ledit indicateur apparaisse dans la fenêtre 8 lorsque le moyen de commande 7 se trouve dans la position correspondante.

L'invention repose donc sur la mise en oeuvre d'une zone délimitée (constituant la fenêtre 8) dans laquelle sont affichées des informations (contenues dans l'indicateur) relatives à la position instantanée dans laquelle se trouve le moyen de commande 7, et donc relatives au mode de fonctionnement instantané de l'autocuiseur 1 correspondant à cette position du moyen de commande 7. Grâce à cette mesure technique, il suffit ainsi à l'utilisateur de consulter la fenêtre d'informations 8 pour immédiatement accéder, de façon parfaitement claire et non ambiguë, à une indication concernant la position instantanée dans laquelle se trouve le moyen de commande 7.

En d'autres termes, le principe général de l'invention consiste à délimiter une zone d'informations (constituée par la fenêtre 8), et à faire en sorte que lorsque le moyen de commande 7 se trouve dans une position prédéterminée, cela génère l'apparition dans ladite fenêtre 8, c'est-à-dire à l'intérieur du contour délimitant cette dernière, d'un indicateur de toute nature (et par exemple de nature visuelle et/ou tactile) informant (directement ou indirectement) l'utilisateur de la position instantanée dans laquelle se trouve le moyen de commande 7.

Le fenêtrage de l'indicateur permet ainsi de fournir à l'utilisateur une information particulièrement simple et claire, limitant les possibilités d'erreurs dans l'utilisation de l'autocuiseur 1.

Bien évidemment, l'invention n'est pas limitée à une liaison fonctionnelle particulière entre le moyen de commande 7, la fenêtre 8 et l'indicateur, l'essentiel étant que cette liaison fonctionnelle génère l'apparition de l'indicateur dans la fenêtre 8 lorsque le moyen de commande 7 se trouve dans la position correspondante.

Cette liaison fonctionnelle peut par exemple être de nature électrique ou électronique. Dans ce cas, la fenêtre 8 peut par exemple consister en un écran d'affichage, du genre écran à cristaux liquides (écran LCD), l'indicateur étant alors constitué par un symbole particulier affiché par ledit écran lorsque le moyen de commande 7 se trouve dans la position correspondante, position qui génère l'envoi d'une information électrique commandant l'apparition dudit indicateur sur l'écran.

De façon préférée, la liaison fonctionnelle entre la fenêtre 8, l'indicateur et le moyen de commande 7 n'est toutefois pas de nature électronique mais plutôt, pour des raisons de simplicité, de fiabilité et de coût, de nature mécanique.

Dans ce cas, qui correspond au mode de réalisation illustré aux figures, le déplacement du moyen de commande 7 entraîne un déplacement relatif de la fenêtre 8 relativement à l'indicateur, de sorte que lorsque le moyen de commande 7 atteint sa position correspondante, l'indicateur est mis en correspondance avec la fenêtre 8 pour apparaître au sein de cette dernière. En d'autres termes, la mise en correspondance de l'indicateur avec la fenêtre 8 est obtenue de préférence par une action manuelle de l'utilisateur sur le moyen de commande 7, de sorte que ledit moyen de commande 7 non seulement commande, comme expliqué dans ce qui précède, au moins une partie du fonctionnement de l'autocuiseur 1, mais commande également le déplacement relatif de la fenêtre 8 et de l'indicateur.

De manière préférentielle, l'indicateur est un indicateur visuel, c'est à-dire qu'il fournit à l'utilisateur au moins une information visuelle. Par exemple, ledit indicateur est un pictogramme symbolisant la fonction de l'autocuiseur sélectionnée par la position dans laquelle se trouve le moyen de commande 7. Bien évidemment, l'invention n'est pas limitée à un indicateur de nature visuelle, et il est tout à fait envisageable que l'indicateur présente une autre nature, et par exemple soit un indicateur tactile, voire combine deux natures différentes (indicateur tacto-visuel par exemple).

De préférence, tel que cela est illustré aux figures, l'autocuiseur 1 comprend une pluralité d'indicateurs 9, 10, 11, chacun d'eux étant représentatif d'une position respective du moyen de commande 7.

Ainsi, dans l'exemple illustré aux figures, l'autocuiseur 1 comprend trois indicateurs différents, savoir :
- un premier indicateur 9 constitué par un pictogramme symbolisant un autocuiseur fermé, ce premier indicateur 9 étant destiné à apparaître dans la fenêtre 8, à la vue de l'utilisateur, lorsque le moyen de commande 7 se trouve dans sa position de verrouillage et d'étanchéité ;
- un deuxième indicateur 10 constitué par un pictogramme symbolisant un nuage de vapeur, ce deuxième indicateur 10 étant destiné à apparaître dans la fenêtre 8, à la vue de l'utilisateur, lorsque le moyen de commande 7 se trouve dans sa position de verrouillage et décompression ;
- et un troisième indicateur 11 constitué par un pictogramme symbolisant un autocuiseur ouvert, ce troisième indicateur 11 étant destiné à apparaître dans la fenêtre 8, à la vue de l'utilisateur, lorsque le moyen de commande 7 se trouve dans sa position d'ouverture.

Avantageusement, la fenêtre d'information 8 est, tout comme le moyen de commande 7, montée sur le couvercle 3. Cela permet à l'utilisateur de bénéficier d'un accès particulièrement facile à l'information apparaissant dans la fenêtre 8, dans la mesure où cette dernière est située (puisqu'elle est montée sur le couvercle 3) au sommet de l'autocuiseur 1 de telle sorte qu'elle est exposée directement au regard de l'utilisateur.

Avantageusement, l'autocuiseur 1 comprend un capot 12 dans lequel est ménagée une lumière formant la fenêtre de visualisation 8. Par exemple, tel que cela est plus particulièrement visible sur la figure 2, le couvercle 3 comprend un corps principal métallique 3A sur lequel est rapporté et fixé, en son centre, un module de commande intégrant le pommeau 7A et le capot 12, ce dernier se présentant sous la forme d'une couronne circulaire entourant la base du pommeau 7A.

Selon le mode de réalisation illustré aux figures, l'autocuiseur 1 comprend également une pièce indicatrice 13 portant au moins l'indicateur (si ce dernier est unique) et de préférence tous les indicateurs 9, 10, 11, le capot 12 et la pièce indicatrice 13 étant montés mobiles l'un relativement à l'autre.

Le moyen de commande 7 est alors conçu pour commander le déplacement relatif du capot 12 et de la pièce indicatrice 13 de façon que l'indicateur se trouve en regard de la fenêtre 8 lorsque le moyen de commande 7 se trouve dans la position correspondante.

Avantageusement, la fenêtre de visualisation 8 est fixe en position, c'est-à-dire qu'elle est conçue pour rester immobile par rapport au reste de l'autocuiseur 1, et notamment par rapport au couvercle 3 sur laquelle elle est préférentiellement montée. Dans ce cas, la pièce indicatrice 13 est en revanche mobile, en particulier par rapport à la fenêtre de visualisation 8 et au couvercle 3, ladite pièce indicatrice 13 étant reliée au moyen de commande 7 pour que ce dernier en commande le déplacement.

Avantageusement; et comme dans le mode de réalisation illustré aux figures, la pièce indicatrice 13 est montée mobile à rotation, de préférence autour de l'axe X-X'. Dans ce cas, le moyen de commande 7 est également préférentiellement monté mobile à rotation, de préférence autour du même axe X-X'.

Le moyen de commande 7 peut être conçu pour commander directement le déplacement de la pièce indicatrice 13, cette dernière étant par exemple directement attachée au pommeau 7A pour tourner avec ce dernier autour de l'axe X-X'. Ainsi l'utilisateur, lorsqu'il tourne manuellement le pommeau 7A, entraîne la rotation autour de l'axe X-X' de la pièce indicatrice 13 par rapport à la fenêtre 8 qui reste fixe relativement au couvercle 3 et à la cuve 2. En d'autres termes, dans le mode de réalisation illustré aux figures, le capot 12 est monté fixe relativement au couvercle 3 tandis que la pièce indicatrice 13 est solidaire du moyen de commande 7 et se déplace avec ce dernier.

Le moyen de commande 7 peut toutefois commander indirectement le déplacement de la pièce indicatrice 13, au moyen d'un élément de transmission intermédiaire assurant l'entraînement de la pièce indicatrice 13 sous l'effet de la mise en mouvement par l'utilisateur du moyen de commande 7.

Dans l'exemple illustré aux figures, la pièce indicatrice 13 comprend une plaqué attachée au pommeau 7A et montée à rotation autour de l'axe X-X', ladite plaque étant située sous le capot 12, entre le corps principal métallique 3A du couvercle 3 et ledit capot 12. Le capot 12 lui-même est constitué d'une plaque annulaire dans l'épaisseur de laquelle est ménagée une lumière traversante formant la fenêtre 8. Ladite lumière présente par exemple, comme illustré aux figures, une forme circulaire. Les pictogrammes formant les indicateurs visuels 9, 10, 11 sont quant à eux disposés les uns à la suite des autres, sur la face supérieure de la pièce indicatrice 13 située en regard du capot 12.

Les indicateurs visuels 9, 10, 11 sont disposés selon un arc de cercle passant par le centre de la lumière 8, de façon que par rotation du pommeau 7A, il soit possible de mettre alternativement et à volonté l'un ou l'autre des pictogrammes formant l'indicateur visuel 9, 10, 11 en correspondance avec la fenêtre 8, de façon à ce que le pictogramme en question soit visible par la fenêtre.

Avantageusement, tel que cela est illustré aux figures, le capot 12 est conçu pour masquer tous les indicateurs visuels 9, 10, 11, à la seule exception de l'indicateur situé en correspondance avec la fenêtre 8 et qui lui est visible de l'extérieur de l'autocuiseur 1 par l'utilisateur. Ainsi, l'utilisateur bénéficie d'une grande fiabilité et clarté d'information puisque seul le pictogramme correspondant à la position instantanée (et donc au fonctionnement instantané sélectionné) du moyen de commande 7 lui est visible, le capot 12 étant réalisé en un matériau suffisamment opaque, voire totalement opaque, pour masquer les autres pictogrammes.

Il est toutefois tout à fait envisageable, sans pour autant que l'on sorte du cadre de l'invention, que les autres pictogrammes restent également en permanence visibles, même si un tel mode de réalisation n'est pas préféré car il est susceptible d'introduire une confusion dans l'esprit de l'utilisateur.

Ainsi, le mode de réalisation préféré illustré aux figures confère un caractère particulièrement ergonomique à l'autocuiseur 1, puisqu'il fournit à l'utilisateur une information simple, unique et claire concernant le mode de fonctionnement sélectionné. La clarté de l'information réside non seulement dans le fait qu'un seul et unique pictogramme peut être affiché à la fois, mais également dans la possibilité offerte par la conception retenue d'avoir des pictogrammes 9, 10, 11 de couleur différente de celles de leur environnement visuel direct constitué par le capot 12, et ce de façon fiable et pérenne, sans compliquer la fabrication ni augmenter le coût de cette dernière. En effet, le contraste entre les pictogrammes 9, 10, 11 et le capot 12 est obtenu tout simplement en choisissant des matériaux de couleurs différentes pour réaliser le capot 12 et la pièce indicatrice 13, sans qu'il ne soit nécessaire de prévoir une coloration superficielle supplémentaire par exemple.

L'invention est particulièrement avantageuse dans le cas où, comme illustré aux figures, l'autocuiseur 1 comprend un écran 40 pour masquer le moyen de verrouillage/déverrouillage 4 du couvercle 3 sur la cuve 2 à la vue de l'utilisateur lorsque le couvercle 3 est rapporté sur la cuve 2.

En effet, l'utilisateur est dans ce cas dans l'impossibilité de savoir dans quelle configuration se trouve le moyen de verrouillage/déverrouillage 4 autrement que de manière indirecte, par l'intermédiaire du système d'information prévu à cet effet.

L'utilisation d'un système d'information basé sur la mise en oeuvre, conformément à l'invention, d'une fenêtre 8 permettant d'afficher un indicateur 9, 10, 11 s'avère particulièrement adaptée puisqu'elle permet à l'utilisateur de connaître de façon particulièrement simple et fiable la configuration du moyen de verrouillage/déverrouillage 4, alors qu'il est impossible à l'utilisateur de visualiser directement la configuration en question.

Dans le mode de réalisation illustré aux figures, l'écran 40 est formé par les poignées de l'autocuiseur elle-mêmes, qui sont montées sur la cuve 2 pour masquer les ouvertures de verrouillage 50A, 50B, 60A, 60B.

On va maintenant décrire le fonctionnement de l'appareil de cuisson 1 conforme à l'invention, selon le mode de réalisation illustré aux figures,

En premier lieu, l'utilisateur place des aliments à cuire dans la cuve 2, c'est-à-dire directement dans celle-ci ou indirectement, par l'intermédiaire d'un panier amovible contenu dans la cuve 2.

L'utilisateur rapporte ensuite le couvercle 3 sur la cuve 2. A cet instant, le moyen de commande unique 7 est dans sa position d'ouverture (déverrouillage et décompression) illustrée à la figure 5, tandis que le pictogramme 11 symbolisant la position d'ouverture se trouve en correspondance avec la fenêtre 8, de sorte que l'utilisateur distingue nettement ce pictogramme et uniquement celui-là, ce qui l'informe de l'état de fonctionnement de son autocuiseur 1.

L'utilisateur imprime ensuite un mouvement de rotation au pommeau 7A dans le sens horaire par rapport au référentiel de la figure 5 (sens symbolisé par la flèche 15, dont la présence sur le couvercle 3 est purement optionnelle) jusqu'à atteindre une position de butée correspondant à la position de verrouillage et d'étanchéité de l'autocuiseur 1 (illustrée à la figure 3). La rotation du pommeau 7A entre sa position de la figure 5 et celle de la figure 3 entraîne concomitamment la rotation de la pièce indicatrice 13, et donc le défilement de la pièce 13 en regard de la fenêtre 8 (qui elle reste immobile) jusqu'à ce qu'apparaisse dans ladite fenêtre 8, lorsque le pommeau 7A est immobilisé dans sa position illustrée à la figure 3, le pictogramme 9 symbolisant la position de verrouillage et d'étanchéité. En passant de sa position d'ouverture à sa position de verrouillage et d'étanchéité, le pommeau 7A passe par la position de verrouillage et décompression, mais sans s'y arrêter.

Une fois le pommeau 7A placé de manière stable en position de verrouillage et d'étanchéité (représentée à la figure 3), l'autocuiseur 1 est soumis à un appareil de chauffe externe, tel qu'une plaque de cuisson, et peut ainsi monter en pression jusqu'à atteindre sa pression de fonctionnement, laquelle est régulée, de manière connue en soi, par une soupape de régulation 14.

A l'issue du cycle de cuisson, l'utilisateur imprime au pommeau 7A un mouvement de rotation dans le sens anti-horaire relativement au référentiel des figures (sens symbolisé par la flèche 16 sur les figures 3 et 5), jusqu'à ce que le pommeau 7A soit stoppé dans sa course dans une position de butée correspondant à la position de verrouillage et décompression illustrée à la figure 4. Cette position de butée est obtenue grâce à la mise en oeuvre d'un doigt de sécurité 17 sensible à la pression. De manière connue en soi, tant que la pression interne (dans l'enceinte) est supérieure à un niveau prédéterminé compatible avec l'ouverture sécurisée du couvercle, ce doigt 17 se trouve dans une position haute empêchant le pommeau 7A de poursuivre sa course angulaire jusqu'à la position d'ouverture illustrée à la figure 5. Tel que cela est illustré à la figure 4, le pictogramme 10 illustrant la position de verrouillage et décompression se trouve alors en correspondance avec la fenêtre 8.

Puis, lorsque la pression interne régnant dans l'enceinte descend en-deçà de la pression de sécurité prédéterminée compatible avec l'ouverture sécurisée du couvercle, le doigt de sécurité 17 retourne dans sa position basse et autorise l'utilisateur à tourner à nouveau le pommeau 7A en sens anti-horaire jusqu'à atteindre la position d'ouverture (illustrée à la figure 5) qui autorise l'ouverture du couvercle en toute sécurité.

## Revendications

1. Marmite domestique (1) comprenant un moyen de commande (7) d'au moins une partie de son fonctionnement, ledit moyen de commande (7) étant monté mobile entre une pluralité de positions, ladite marmite (1) étant **caractérisée en ce qu'**elle est en outre pourvue d'une fenêtre d'information (8) et d'au moins un indicateur (9, 10, 11) représentatif de l'une des positions du moyen de commande (7), et **en ce que** la fenêtre (8), l'indicateur (9, 10, 11) et le moyen de commande (7) coopèrent pour que ledit indicateur (9, 10, 11) apparaisse dans la fenêtre (8) lorsque le moyen de commande (7) se trouve dans la position correspondante.

2. Marmite (1) selon la revendication 1 **caractérisée en ce que** le moyen de commande (7) est conçu pour être actionné manuellement par l'utilisateur.

3. Marmite (1) selon l'une des revendications 1 et 2 **caractérisée en ce qu'**elle comprend une cuve (2) et un couvercle (3) destiné à être rapporté sur ladite cuve (2) pour former avec cette dernière une enceinte de cuisson.

4. Marmite (1) selon la revendication 3 **caractérisée en ce que** le moyen de commande (7) et la fenêtre d'information (8) sont montés sur le couvercle (3).

5. Marmite (1) selon la revendication 3 ou 4 **caractérisée en ce que** le moyen de commande (7) est monté mobile entre au moins une première et une deuxième position et **en ce qu'**elle comprend un moyen de verrouillage/déverrouillage (4) du couvercle (3) sur la cuve (2), le moyen de commande (7) permettant à l'utilisateur de commander au moins ce moyen de verrouillage/déverrouillage (4) de façon que la première position corresponde au verrouillage et que la deuxième position corresponde au déverrouillage.

6. Marmite (1) selon la revendication 5 **caractérisée en ce qu'**elle comprend un écran (40) pour masquer le moyen de verrouillage/déverrouiflage (4) du couvercle (3) sur la cuve (2) à la vue de l'utilisateur lorsque le couvercle (3) est rapporté sur la cuve (2).

7. Marmite (1) selon l'une des revendications 1 à 6 **caractérisée en ce que** le moyen de commande (7) est monté mobile entre au moins une troisième et une quatrième position et **en ce qu'**elle comprend un organe de décompression activable/désactivable, le moyen de commande (7) permettant à l'utilisateur de commander au moins cet organe de décompression de façon que lorsque le moyen de commande (7) occupe sa troisième position l'organe de décompression est désactivé tandis que lorsque le moyen de commande (7) occupe sa quatrième position l'organe de décompression est activé.

8. Marmite (1) selon les revendications 5 et 7 **caractérisée en ce que** d'une part les première et troisième positions sont confondues et d'autre part en ce que les deuxième et quatrième positions sont confondues.

9. Marmite (1) selon l'une des revendications 1 à 8 **caractérisée en ce que** ledit indicateur (9, 10, 11) est un indicateur visuel, tel qu'un pictogramme.

10. Marmite (1) selon l'une des revendications 1 à 9 **caractérisée en qu'**elle comprend une pluralité d'indicateurs (9, 10, 11), chacun d'eux étant représentatif d'une position respective du moyen de commande (7).

11. Marmite (1) selon l'une des revendications 1 à 10 **caractérisée en ce qu'**elle comprend d'une part un capot (12) dans lequel est ménagé une lumière formant la fenêtre d'information (8) et d'autre part une pièce indicatrice (13) portant au moins ledit indicateur (9, 10, 11), le capot (12) et la pièce indicatrice (13) étant montés mobiles l'un relativement à l'autre, le moyen de commande (7) étant conçu pour commander le déplacement relatif du capot (12) et de la pièce indicatrice (13) de façon que ledit indicateur (9, 10, 11) se trouve en regard de la fenêtre (8) lorsque le moyen de commande (7) se trouve dans la position correspondante.

12. Marmite (1) selon la revendication 11 **caractérisée en ce que** la fenêtre de visualisation (8) est fixe en position tandis que la pièce indicatrice (13) est mobile et reliée au moyen de commande (7) pour que ce dernier en commande le déplacement.

13. Marmite (1) selon la revendication 11 ou 12 **caractérisée en ce que** la pièce indicatrice (13) est montée mobile à rotation.

14. Marmite (1) selon l'une des revendications 1 à 13 **caractérisée en ce** le moyen de commande (7) est monté mobile à rotation.

15. Marmite (1) selon les revendications 4, 13 et 14 **caractérisée en ce que** le capot (12) est monté fixe relativement au couvercle (3) tandis que la pièce indicatrice (13) est solidaire du moyen de commande (7).

16. Marmite (1) selon l'une des revendications 1 à 15 **caractérisée en ce qu'**elle est constituée par un autocuiseur.

## Claims

1. Domestic cooking pot (1) comprising means of controlling (7) at least part of its operation, wherein said control means (7) have a mobile mounting between a plurality of positions, wherein said cooking pot (1) is **characterised in that** it is further fitted with an information window (8) and at least an indicator (9, 10, 11) that is representative of one of the positions of the control means (7), and **in that** the window (8), the indicator (9, 10, 11) and the control means (7) work together so that said indicator (9, 10, 11) appears in the window (8) when the control means (7) are in the corresponding position.

2. Cooking pot (1) according to claim 1 **characterised in that** the control means (7) are designed to be manually actuated by the user.

3. Cooking pot (1) according to any of claims 1 and 2 **characterised in that** it comprises a pan (2) and a lid (3) designed to be added to said pan (2) to form a cooking chamber with the latter.

4. Cooking pot (1) according to claim 3 **characterised in that** the control means (7) and the information window (8) are mounted on the lid (3).

5. Cooking pot (1) according to claim 3 or 4 **characterised in that** the control means (7) have a mobile mounting between at least a first and a second position and **in that** they comprise locking/release means (4) of the lid (3) onto the pan (2), wherein the control means (7) permit the user to control at least these locking/release means (4) so that the first position corresponds to the locking and the second position corresponds to the release.

6. Cooking pot (1) according to claim 5 **characterised in that** it comprises a display (40) to hide the locking/release means (4) of the lid (3) on the pan (2) from the view of the user when the lid (3) is added onto the pan (2).

7. Cooking pot (1) according to any of claims 1 to 6 **characterised in that** the control means (7) have a mobile mounting between at least a third and a fourth position and **in that** they comprise a decompression part that may be activated or deactivated, wherein the control means (7) permit the user to control at least this decompression part so that when the control means (7) occupies its third position the decompression part is deactivated whereas when the control means (7) occupies its fourth position, the decompression part is activated.

8. Cooking pot (1) according to claims 5 and 7 **characterised in that** the first and third positions are the same and **in that** the second and fourth positions are the same.

9. Cooking pot (1) according to any of claims 1 to 8 **characterised in that** said indicator (9, 10, 11) is a visual indicator, such as a pictogram.

10. Cooking pot (1) according to any of claims 1 to 9 **characterised in that** it comprises a plurality of indicators (9, 10, 11), wherein each of them are representative of a respective position of the control means (7).

11. Cooking pot (1) according to any of claims 1 to 10 **characterised in that** it comprises a cover (12) in which an opening is fitted that forms the information window (8) and an indicator part (13) beating at least said indicator (9, 10, 11), wherein the cover (12) and the indicator part (13) have a mobile mounting with respect to one another, wherein the control means (7) are designed to control the relative movement of the cover (12) and the indicator part (13) so that said indicator (9, 10, 11) is aligned with the window (8) when the control means (7) are in the corresponding position.

12. Cooking pot (1) according to claim 11 **characterised in that** the viewing window (8) is fixed in position while the indicator part (13) is mobile and connected to the control means (7) so that the latter controls its movement.

13. Cooking pot (1) according to claims 11 or 12 **characterised in that** the indicator part (13) has a mobile mounting in rotation.

14. Pot (1) according to any of claims 1 to 13 **characterised in that** the control means (7) have a mobile mounting in rotation.

15. Cooking pot (1) according to claims 4, 13 and 14 **characterised in that** the cover (12) has a fixed mounting with respect to the lid (3) while the indicator part (13) is attached to the control means (7)

16. Cooking pot (1) according to any of claims 1 to 15 **characterised in that** it is formed by a pressure cooker.

## Patentansprüche

1. Haushaltskochtopf (1), der ein Steuermittel (7) für mindestens einen Teil seines Betriebs aufweist, wobei das Steuermittel (7) zwischen mehreren Positionen beweglich installiert ist, wobei der Kochtopf (1) **dadurch gekennzeichnet ist, dass** er ferner mit einem Informationsfenster (8) versehen ist und mit mindestens einer Anzeige (9, 10, 11), die eine der Positionen des Steuermittels (7) darstellt, und dass das Fenster (8), die Anzeige (9, 10, 11) und das Steuermittel (7) zusammenwirken, so dass die Anzeige (9, 10, 11) in dem Fenster (8) erscheint, wenn sich das Steuermittel (7) in der entsprechenden Position befindet.

2. Kochtopf (1) nach Anspruch 1, **dadurch gekennzeichnet, dass** das Steuermittel (7) konzipiert ist, um vom Benutzer manuell betätigt zu werden.

3. Kochtopf (1) nach einem der Ansprüche 1 und 2, **dadurch gekennzeichnet, dass** er einen Behälter (2) und einen Deckel (3) aufweist, der dazu bestimmt ist, auf den Behälter (2) aufgesetzt zu werden, um mit diesem Letzteren einen Gareinschluss zu bilden.

4. Kochtopf (1) nach Anspruch 3, **dadurch gekennzeichnet, dass** das Steuermittel (7) und das Informationsfenster (8) auf den Deckel (3) montiert sind.

5. Kochtopf (1) nach Anspruch 3 oder 4, **dadurch gekennzeichnet, dass** das Steuermittel (7) zwischen mindestens einer ersten und einer zweiten Position beweglich montiert ist und dass er ein Mittel zum Verriegeln/Entriegeln (4) des Deckels (3) auf dem Behälter (2) aufweist, wobei es das Steuermittel (7) dem Benutzer erlaubt, mindestens dieses Verriegelungs-/Entriegelungsmittel (4) derart zu steuern, dass die erste Position dem Verriegeln entspricht und die zweite Position dem Entriegeln entspricht.

6. Kochtopf (1) nach Anspruch 5, **dadurch gekennzeichnet, dass** er eine Abschirmung (40) aufweist, um das Verriegelungs-/Entriegelungsmittel (4) des Deckels (3) auf dem Behälter (2) für den Blick des Benutzers zu verdecken, wenn der Deckel (3) auf den Behälter (2) aufgesetzt ist.

7. Kochtopf (1) nach einem der Ansprüche 1 bis 6, **dadurch gekennzeichnet, dass** das Steuermittel (7) zwischen mindestens einer dritten und einer vierten Position beweglich montiert ist und dass er ein aktivierbares/deaktivierbares Druckablassorgan aufweist, wobei es das Steuermittel (7) dem Benutzer erlaubt, mindestens dieses Druckablassorgan derart zu steuern, dass das Druckablassorgan, wenn das Steuermittel (7) seine dritte Position belegt, deaktiviert ist, während das Druckablassorgan, wenn das Steuermittel (7) seine vierte Position belegt, aktiviert ist.

8. Kochtopf (1) nach den Ansprüchen 5 und 7, **dadurch gekennzeichnet, dass** einerseits die erste und die dritte Position zusammenfallen und dass andererseits die zweite und die vierte Position zusammenfallen.

9. Kochtopf (1) nach einem der Ansprüche 1 bis 8, **dadurch gekennzeichnet, dass** die Anzeige (9, 10, 11) eine visuelle Anzeige ist, wie zum Beispiel ein Piktogramm.

10. Kochtopf (1) nach einem der Ansprüche 1 bis 9, **dadurch gekennzeichnet, dass** er mehrere Anzeigen (9, 10, 11) aufweist, von welchen jede eine jeweilige Position des Steuermittels darstellt.

11. Kochtopf (1) nach einem der Ansprüche 1 bis 10, **dadurch gekennzeichnet, dass** er einerseits eine Kappe (12) aufweist, in der ein Langloch eingerichtet ist, das das Informationsfenster (8) bildet, und andererseits einen Anzeigeteil (13), der mindestens die Anzeige (9, 10, 11) trägt, wobei die Kappe (12) und der Anzeigeteil (13) zueinander beweglich montiert sind, wobei das Steuermittel (7) konzipiert ist, um die relative Bewegung der Kappe (12) und des Anzeigeteils (13) derart zu steuern, dass sich die Anzeige (9, 10, 11) gegenüber dem Fenster (8) befindet, wenn sich das Steuermittel (7) in der entsprechenden Position befindet.

12. Kochtopf (1) nach Anspruch 11, **dadurch gekennzeichnet, dass** das Sichtfenster (8) in Position stationär ist, während das Anzeigefenster (13) beweglich und mit dem Steuermittel (7) verbunden ist, so dass dieses Letztere dessen Bewegung steuert.

13. Kochtopf (1) nach dem Anspruch 11 oder 12, **dadurch gekennzeichnet, dass** der Anzeigeteil (13) in Drehung beweglich montiert ist.

14. Kochtopf (1) nach einem der Ansprüche 1 bis 13, **dadurch gekennzeichnet, dass** das Steuermittel (7) in Drehung beweglich montiert ist.

15. Kochtopf (1) nach den Ansprüchen 4, 13 und 14, **dadurch gekennzeichnet, dass** die Kappe (12) in Bezug zu dem Deckel (3) stationär montiert ist, während der Anzeigeteil (13) mit dem Steuermittel (7) fest verbunden ist.

16. Kochtopf (1) nach einem der Ansprüche 1 bis 15, **dadurch gekennzeichnet, dass** er aus einem Schnellkochtopf besteht.
